# EUROPÄISCHE PATENTSCHRIFT

(11) **EP 1 896 627 B1**
(45) Veröffentlichungstag und Bekanntmachung des Hinweises auf die Patenterteilung: **28.10.2009**
(21) Anmeldenummer: 06754443.7
(22) Anmeldetag: 20.06.2006
(51) Int. Cl.: C23C 4/18, C23C 4/12, C23C 4/08, C23C 26/02

(54) **HÜLLROHR AUS FERRITISCH/MARTENSITISCHEM ODER AUSTENITISCHEM STAHL FÜR KERNBRENNELEMENTE/-STOFFE UND VERFAHREN ZUR NACHBEHANDLUNG EINER DARAUF BEFINDLICHEN HOCHTEMPERATURGEEIGNETEN FeCrAl-SCHUTZSCHICHT**
CLADDING TUBES MADE OF FERRITIC/MARTENSITIC OR AUSTENITIC STEEL FOR NUCLEAR FUEL ELEMENTS/FUELS AND METHOD FOR SUBSEQUENTLY TREATING A FECRA PROTECTIVE LAYER THEREON THAT IS SUITED FOR HIGH TEMPERATURES
GAINE EN ACIER FERRITIQUE/MARTENSITIQUE OU AUSTENITIQUE POUR COMBUSTIBLES/ELEMENTS COMBUSTIBLES NUCLEAIRES ET PROCEDE DE TRAITEMENT POSTERIEUR D'UNE COUCHE DE PROTECTION A BASE DE FECRAL ADAPTEE A DES TEMPERATURES ELEVEES APPLIQUEE SUR CELLE-CI

(30) Priorität: 29.06.2005 DE 102005030231
(43) Veröffentlichungstag der Anmeldung: 12.03.2008
(73) Patentinhaber: Forschungszentrum Karlsruhe GmbH, 76133 Karlsruhe (DE)
(72) Erfinder: HEINZEL, Annette, 76351 Linkenheim-Hochstetten (DE); MÜLLER, Georg, 76139 Karlsruhe (DE); WEISENBURGER, Alfons, 76437 Rastatt (DE); ZIMMERMANN, Frank, 76187 Karlsruhe (DE); SCHUMACHER, Gustav, 76149 Karlsruhe (DE); ENGELKO, Vladimir, 195112 St. Petersburg (RU)
(74) Vertreter: Rückert, Friedrich
(86) Internationale Anmeldenummer: PCT/EP2006/005877
(87) Internationale Veröffentlichungsnummer: WO 2007/000261

(56) Entgegenhaltungen:
- EP-B1- 0 190 378
- DD-A1- 247 924
- DE-A1- 19 609 690
- DE-C1- 19 853 285
- US-A- 3 400 010
- US-A- 4 232 094
- US-B1- 6 197 386

## Beschreibung

Die Erfindung betrifft ein Verfahren zum Aufbringen einer hochtemperaturgeeigneten FeCr-Al-Schutzschicht auf der kühlmittelberührten Oberfläche eines Hüllrohrs für Kernbrennstoffe aus ferritisch/martensitischem oder austenitischem Stahl, das einem metallischen Kühlmittel ausgesetzt ist. Die Hüllrohre sind für den Einsatz in Reaktoranordnungen mit Flüssigmetallkühlung, wobei das flüssigmetallische Kühlmittel Blei ist oder Bleilegierungen sind.

Ein Verfahren verbesserte Schichthaftung in einem Lagerwerkzeugteil zu erreichen besteht nach der US 4,232,094 aus den folgenden Schritten:
Sprühen einer äußeren Deckschicht auf dem betreffenden Teil; Wärmeanwendung direkt und nur auf äußere Deckschicht derart, dass nur die besagte Schicht in einer auf 10⁻¹ Torr oder weniger evakuierten Kammer wieder geschmolzen wird, derart, dass die Eigenschaften des Trägerteils unverändert bleiben und die Schichthaftung verbessert ist;
Das Wiederschmelzen wird mit einem Elektronenstrahl von einem Elektronestrahlschweiß gerät ausgeführt.

Stahloberflächen wie die der Hüllrohre oder Einbaustrukturen in Reaktoren, die mit flüssigem Blei oder Bleilegierungen betrieben werden unterliegen einem Korrosionsangriff durch das flüssige Metall, bei dem durch Lösung von Legierungselementen des Stahls eine allmähliche Zerstörung der Metallbauteile stattfindet. Dieser Prozess kann verhindert werden, wenn im Blei oder seinen Legierungen Sauerstoff gelöst wird, und zwar mit einer Konzentration, bei der sich Oxidschichten an der Oberfläche bilden, die den Lösungsprozess unterbinden. Die Sauerstoffkonzentration darf jedoch den Wert nicht überschreiten, bei dem sich Oxide der Bleilegierungen bilden.

In Gegenwart von Bleilegierungen, die Sauerstoff in einer Konzentration enthalten, bei der der Stahl oxidiert, die Bleilegierungen jedoch nicht, entstehen durch Diffusion von Eisenionen an der Oberfläche Magnetitschichten und durch Diffusion des Sauerstoffs in das Metall Spinellschichten unter der Oberfläche, die im Laufe der Zeit ständig wachsen. Dieser Prozess verhindert zwar den Lösungsangriff durch die Bleilegierungen, hat aber nach längerer Zeit eine erhebliche Beeinträchtigung der Materialeigenschaften durch Oxidation zur Folge. Außerdem erzielt man dadurch eine zuverlässige Schutzwirkung nur für Temperaturen unterhalb von 500°C. Da an Hüllrohren in einem Reaktor höhere Temperaturen zu erwarten sind müssen für höhere Temperaturen zusätzliche Schutzschichten in Betracht gezogen werden. Als viel versprechend zeigt sich hierbei der Einsatz von aluminiumhaltigen Legierungen, die durch selektive Bildung von dünnen Aluminiumoxidschichten eine hervorragende Diffusionsbarriere gegen den Lösungsangriff des Flüssigmetalls und gegen eine fortschreitende Oxidation des Stahls darstellen. Eine Zulegierung von Aluminium in die gesamte Stahlmatrix ist nicht praktikabel, da Aluminium bekanntlich zu einer starken Versprödung des Stahls führt. Deswegen muss der Aluminiumanteil auf eine dünne Oberflächenschicht begrenzt werden. Zur Erzeugung von aluminiumhaltigen Oberflächenlegierungen wurden zwei Verfahren getestet, das industrielle 'Pack-cementation' und im Labormaßstab das Oberflächenschmelzlegieren mit gepulsten Elektronenstrahlen (GESA-Verfahren).

In der DD 247 924 A1 wird ein Verfahren beschrieben, beschichtete Gegenstände nach zu behandeln. Hierzu werden solche beschichteten Oberflächenbereiche einem oszillierenden Elektronenstrahl ausgesetzt. Ziel ist es dabei, die Rissbeständigkeit behandelter Oberflächen bei vorzugsweise schlagbeanspruchten Gegenständen zu erhöhen, um den Härteunterschied zwischen der Oberflächenschicht und dem Grundwerkstoff zu verringern und die Tragfähigkeit des Grundwerkstoffs zu erhöhen. Dies wird erreicht, in dem die beschichtete Oberflächenbereiche durch einen oszillierenden Elektronenstrahl so weit erwärmt werden, dass die verschleißfeste Oberflächenschicht über ihre gesamte Schichtdicke umgeschmolzen und gleichzeitig die darunter liegende Randzone des Grundwerkstoffs in einem Bereich von etwa 0,3 mm auf Härtetemperatur erhitzt und durch Selbstabschreckung gehärtet wird.

In der DE 196 09 690 A1 wird die Bereitstellung einer Turbinenschaufel erläutert, die mit einer korrosionsbeständigen MCrAlY-Schutzschicht versehen ist. Die Deckschicht soll nicht zur Spallation neigen. Hierzu besteht die Oberflächenschicht der MCrAlY-Schutzschicht bis zu einer Tiefe von 5 - 50 µm großflächig und gleichmäßig über die gesamte Oberfläche aus einer einphasigen Legierung. Die einphasige Legierung wird durch Umschmelzen mit einem gepulsten Elektronenstrahl erzeugt.

Beim 'Pack-cementation' handelt es sich um ein Hochtemperaturdiffusionsverfahren, bei dem bei ca. 900 °C aus der Gasphase Aluminium in die Stahlmatrix diffundiert. Beim GESA-Verfahren wird eine zuvor aufgebrachte Aluminiumschicht bzw. dünne Folie mit Hilfe eines gepulsten Elektronenstrahls in die Oberfläche des Stahls legiert. An Proben, die mit beiden Verfahren behandelt wurden, konnte der grundsätzliche Schutzmechanismus nachgewiesen werden. Allerdings lassen sich beide Verfahren für den Einsatz auf reale dünnwandige Rohre nur ungenügend übertragen. Wegen der hohen Prozesstemperatur beim Diffusionsverfahren ist der Einsatz grundsätzlich nur auf nickelhaltige austenitische Stähle begrenzt. Die Formstabilität der Hüllrohre kann aufgrund der hohen Temperatur nicht gewährleistet werden. Des Weiteren enthält die Oberflächenlegierungsschicht Nickel. Nickel hat von allen Legierungsbestandteilen des Stahls die höchste Löslichkeit in Blei, wodurch eine Langzeitbeständigkeit in Blei und Bleilegierungen fragwürdig ist. Das GESA-Verfahren hat den Nachteil, dass wegen der räumlichen Begrenzung des Elektronenstrahls das ausgedehnte Hüllrohr mit mehreren Pulsen, überlappend behandelt werden muss. An den Überlappungsbereichen, kann ein Teil der zuvor aufgebrachten Aluminiumschicht verdampfen, so dass lokal nicht ausreichend Aluminium in die Stahloberfläche einlegiert wird. Solche lokalen Defekte müssen verhindert werden.

Der Erfindung liegt die Aufgabe zugrunde, Hüllrohre aus ferritisch/martensitischem oder austenitischem Stahl für Kernbrennelemente/-stoffe bereitzustellen, die auf der kühlmittelberührten Oberfläche mit einer Schutzschicht versehen sind, die bei wesentlich höheren Temperaturen als 500°C noch eine zuverlässige Schutzwirkung aufbringen.

Die Lösung der Aufgabe wird durch die Verfahrensschritte des Anspruchs 1 erreicht. Die technische Realisierung der Oberflächenlegierung erfolgt durch Beschichtung mit dem Niederdruck-Plasma-Sprühverfahren (LPPS), das im industriellen Maßstab verfügbar ist. Die geforderten dünnen Schichten werden jedoch wegen der relativ großen Sprühtropfen sehr rau und porös und haben keine gute Haftung unter anderem, da die Substrattemperatur niedrig, < *600°C,* gehalten werden muss, um die Formstabilität der Hüllrohre zu gewährleisten und bei ferritisch/martensitische Hüllrohren das Gefüge des Stahls beizubehalten. Aus diesem Grunde können die FeCrAl-Schichten nicht in dieser Form eingesetzt werden. Deshalb wird die Schicht, abhängig von ihrer Dicke mit einem gepulsten Elektronenstrahl von 20 - 40 µs Dauer, einer Elektronenenergie von 100 - 200 keV und einer Energiedichte von 30 -50 J/cm² zusammen mit der oberflächennahen Stahlschicht des Hüllrohres zu einer schützenden Oberflächenlegierungsschicht, umgeschmolzen. Die Legierungschicht besteht in Gew% aus 3 - 15% Aluminium, 0 - 25% Chrom mit Eisen als Rest. Dabei erfolgt eine homogene Durchmischung der Legierungselemente zusammen mit der dünnen angeschmolzenen Oberflächenschicht des Stahls am Übergang Schicht zu Stahloberfläche. Das sorgt für eine innige metallische Anbindung der Legierungsschicht (Anspruch 2). Durch das kurzzeitige Umschmelzen der FeCrAl-Schicht wird diese zusätzlich geglättet und verdichtet. Da die FeCrAl -Schicht sich in ihren thermophysikalischen Eigenschaften wie Schmelzpunk, Dichte, Wärmeleitung und Dampfdruck der Stahlmatrix des Hüllrohres sehr ähnlich ist, kann hier die Umschmelzung ohne Schwierigkeiten mit überlappenden Elektronenstrahlpulsen durchgeführt werden.

Bei dem Verfahren werden in Gegenwart von Sauerstoff selektiv bis zu 50 µm dünne Aluminiumoxidschichten gebildet, welche die Anionen- und Kationen-Diffusion so stark behindern, dass ein Korrosionsschutz durch eine sehr langsam wachsende Oxidschicht entsteht. Das Hüllrohr ist in flüssigem Blei oder Bleilegierungen gegen den Korrosionsangriff dieser Flüssigmetalle bis zu 800°C durch eine Oberflächenlegierungsschicht geschützt. Gegenüber der Beschichtung mit einer schützenden Oxidschicht hat die eine Schutzschicht bildende Legierung an der Oberfläche den Vorteil, dass Defekte oder Risse in der Oxidschicht durch den nach diffundierenden Oxidbildner ausgeheilt werden und dass die Schutzschichten bis zu wesentlich höheren Temperaturen (800°C) stabil bleiben und ihre schützenden Eigenschaften beibehalten (Verwendungsanspruch 3).

Das wird anhand der Zeichnung noch weiter erläutert. Es zeigen:
- Figur 1: den schematischen Aufbau der Legierungsschicht;
- Figur 2: die FeCrAl-Schicht;
- Figur 3: Schnitt der Anlage GESA.

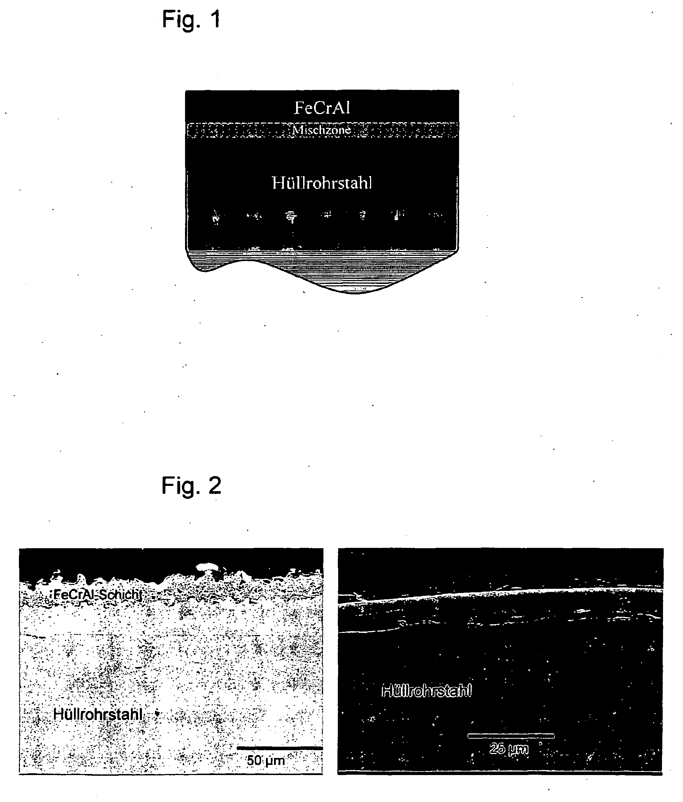

In Fig. 1 ist der schematische Aufbau der der Legierungsschutzschicht auf dem Hüllrohrstahl im Querschnitt dargestellt. Sie zeigt die geschmolzene FeCrAl-Schicht auf der Stahloberfläche, die in der Anschmelzzone der Stahloberfläche (Mischungszone) metallisch fest mit der Stahlmatrix des Hüllrohres verbunden ist.

Die Schmelztiefe kann auf bis zu 50µm mithilfe der Elektronenenergie ausgedehnt werden. Die Verwendung eines gepulsten Elektronenstrahls hat den Vorteil, dass sich die Materialzonen des Hüllrohrs außerhalb der Legierungsschicht nur geringfügig erwärmen. In Fig. 2 sind die Querschnitte durch Proben nach der LPPS-Beschichtung und der nachfolgenden Behandlung mit dem gepulsten Elektronenstrahl dargestellt. Die anfänglich raue, poröse FeCrAl-Schicht mit ca. 20µm Dicke wird glatt, porenfrei und hat eine gute, metallische Anbindung.

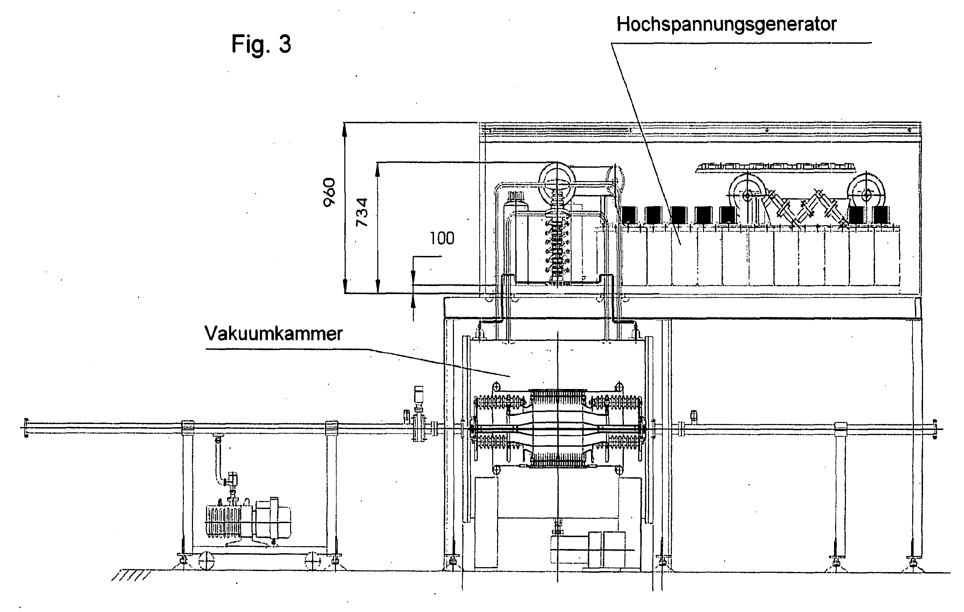

Für die Umschmelzung und Anschmelzung der abgeschiedenen Schicht wird der gepulste Elektronenstrahl der GESA IV Anlage benutzt, die für die Behandlung von Hüllrohren aufgebaut wurde, Fig. 3. Die Anlage besteht aus einem Hochspannungsgenerator und einem zylindrischen Elektronenbeschleuniger, der sich in einer Vakuumkammer befindet. Der Elektronenstrahl hat eine laterale Ausdehnung von 32 cm. Das ist die Länge die mit einem Puls behandelt werden kann. Für lange Hüllrohre wird das Hüllrohr entlang der Symmetrieachse des Beschleunigers verschoben.

## Patentansprüche

1. Verfahren zum Aufbringen einer hochtemperaturgeeigneten FeCr-Al-Schutzschicht auf der kühlmittelberührten Oberfläche eines Hüllrohrs für Kernbrennstoffe aus ferritisch/martensitischem oder austenitischem Stahl,
*wobei* auf dem Hüllrohr eine bis zu 50 µm dicke FeCrAl-Schutzschicht *folgender Zusammensetzung in %Gew:*
*Cr: O - 25,*
*Al: 3 - 15,*
*Fe: Rest,*
mittels Niederdruck-Plasmaspritzen aufgetragen wird und danach die aufgetragene Schicht mit:
einem gepulsten Elektronenstrahl von. 20 - 40 µs Dauer, einer Elektronenenergie von 100 - 200 keV und
einer Energiedichte von 30 -50 J/cm²
zusammen mit der oberflächennahen Stahlschicht des Hüllrohres zu einer, schützenden Oberflächenlegierungsschicht, umgeschmolzen wird.

2. Verfahren nach Anspruch 1, **dadurch gekennzeichnet, dass** durch die Behandlung mit dem gepulsten Elektronenstrahl an der Grenzfläche zwischen dem Hüllrohr und der FeCrAl-Schutzschicht eine Legierungsschicht aus den Materialien des Hüllrohrs und der Oberflächenlegierungsschicht erzeugt wird.

3. Verwendung eines Hüllrohrs in Reaktoranordnungen, das nach dem Verfahren nach Anspruch 1 und/oder 2 oberflächenbeschichtet wurde und das im Betrieb mit flüssigem Blei oder flüssigen Bleilegierungen bei Temperaturen bis zu 800°C in Kontakt steht.

## Claims

1. Method for applying a FeCrAl protective layer suitable for high temperatures on the surface of a cladding tube for nuclear fuels produced from ferritic/martensitic or austenitic steel, said surface being contacted by coolant, wherein an FeCrAl protective layer that is up to 50 µm thick and has the following composition in % by weight:
Cr: 0 - 25,
Al: 3 - 15,
Fe: remainder,
is applied on the cladding tube by means of low pressure plasma spraying and afterwards the applied layer is remelted with:
a pulsed electron beam of 20 - 40 µs duration,
an electron energy of 100 - 200 keV and
an energy density of 30 - 50 J/cm²
together with the near to surface steel layer of the cladding tube to form a protective surface alloy layer.

2. Method according to Claim 1, **characterized in that** through the treatment with the pulsed electron beam, an alloy layer is generated from the materials of the cladding tube and of the surface alloy layer at the boundary layer between the cladding tube and the FeCrAl protective layer.

3. Use of a cladding tube in reactor arrangements, said tube having been coated according to the method according to Claim 1 and/or 2 and being in contact in operation with liquid lead or liquid lead alloys at temperatures of up to 800°C.

## Revendications

1. Procédé pour appliquer une couche de protection à base de FeCrAl adaptée à des températures élevées sur la surface en contact avec un fluide caloporteur d'une gaine pour combustibles nucléaires en acier ferritique/martensitique ou austénitique, selon lequel, on applique sur la gaine par projection au plasma à basse pression, une couche de protection à base de FeCrAl ayant une épaisseur de 1 à 50 µm et ayant la composition suivante en pourcentage pondéral :
*Cr:* 0 - 25,
*Al: 3 - 15,*
*Fe: complément,*
puis, on refond la couche ainsi appliquée à l'aide d' :
un faisceau électronique pulsé pendant une durée de 20 - 40 µs, avec une énergie électronique de 100 - 200 keV, et
une densité de flux d'énergie de 30 - 50 J/cm²
avec la couche d'acier proche de la surface de la gaine pour obtenir une couche d'alliage surfacique de protection.

2. Procédé selon la revendication 1,
**caractérisé en ce que**
suite au traitement par le faisceau électronique pulsé on obtient à l' interface entre la gaine et la couche de protection à base de FeCrAl, une couche d'alliage constituée des matériaux de la gaine et de la couche d'alliage surfacique.

3. Utilisation dans des dispositifs de réacteur d'une gaine dans des dispositifs de réacteur dont la surface a été recouverte conformément à la mise en oeuvre du procédé selon la revendication 1 et/ou 2, et qui en fonctionnement est en contact avec du plomb liquide ou des alliages de plomb liquides à des températures pouvant aller jusqu'à 800°C.
